# EUROPEAN PATENT APPLICATION

(11) **EP 2 363 660 A1**
(43) Date of publication of application: **07.09.2011**
(21) Application number: 10005147.3
(22) Date of filing: 17.05.2010
(51) Int. Cl.: F24J 2/52, H01L 31/042

(54) **Solar battery module**

(30) Priority: 02.03.2010 TW 99105954
(71) Applicant: AblyTek Co., Ltd, Alian Township Kao hsiung 822 (TW)
(72) Inventor: Hou, Chien-Tsai, Sanmin Dist. Kaohsiung City 807 (TW); Hsueh, Ya-Che, Ciaotou Township Kaohsiung County 825 (TW); Chiu, Chung-Li, Rende Township Tainan County 717 (TW)
(74) Representative: Lang, Johannes

(57) **Abstract**

A solar battery module comprises a frame member (2) and a solar battery panel (3). The frame member (2) includes frame strips (21) and coupling members (22). Each frame strip (21) has an open-ended mounting slot (213), and two engaging grooves (214) formed respectively in two ends. Each coupling member (22) has two abutment portions (221) abutting respectively against two adjacent ends of two adjacent frame strips (21), a curved connecting portion (222) interconnecting the abutment portions (221), a curved positioning slot (223) in spatial communication with the mounting slots (213) in two adjacent frame strips (21), and two engaging arms (224) extending respectively from the abutment portions (221) and retained respectively within two corresponding engaging grooves (214). The panel (3) includes mounting portions (31) disposed respectively within the mounting slots (213) in the frame strips (21), and positioning portions (32) disposed respectively within the positioning slots (223) in the coupling members (22).

## Description

This invention relates to a device for generating electric power, and more particularly to a solar battery module.

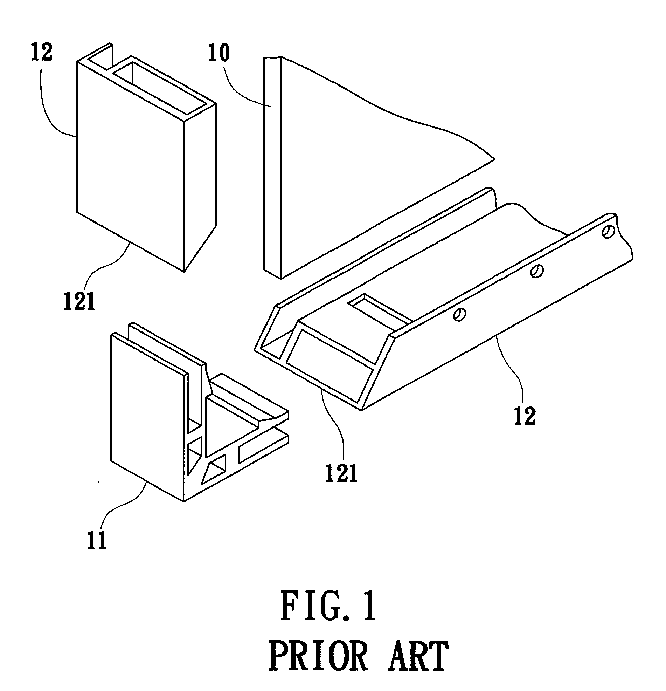

Referring to Fig. 1, a conventional frame member for a solar battery panel disclosed in Taiwanese Utility Model Publication No. M293419 includes four corner joints 11 and four frame strips 12 for surrounding and protecting a solar battery panel 10.

The frame member suffers from the following disadvantages:
(1) Each of the frame strips 12 needs to be finished after molding to facilitate its firm connection with the adjacent corner joints 11 and allow two adjacent inclined end surfaces 121 of two adjacent frame strips 12 to abut against each other. The finishing process results in an increase in the manufacturing cost of the frame member.
(2) Since either inner or outer sides of any two interconnected frame strips 12 form an angle of 90°, damage is easily caused to corners of the solar batter panel 10. Furthermore, during assembly of the corner joints 11 and the frame strips 12, a person may be hurt by one corner of the frame member.

The object of this invention is to provide a solar battery module that can overcome the above-mentioned disadvantages associated with the prior art.

According to this invention, a solar battery module comprises a frame member and a solar battery panel. The frame member includes frame strips and coupling members. Each frame strip has an open-ended mounting slot, and two engaging grooves formed respectively in two ends. Each coupling member has two abutment portions abutting respectively against two adjacent ends of two adjacent frame strips, a curved connecting portion interconnecting the abutment portions, a curved positioning slot in spatial communication with the mounting slots in two adjacent frame strips, and two engaging arms extending respectively from the abutment portions and retained respectively within two corresponding engaging grooves in the frame strips. The panel includes mounting portions disposed respectively within the mounting slots in the frame strips, and positioning portions disposed respectively within the positioning slots in the coupling members.

Since each end of each of the coupling members is connected to the corresponding frame strip, such that the corresponding abutment portion of the corresponding coupling member abuts against the corresponding end of the corresponding frame strip, and such that the corresponding engaging arm of the corresponding coupling member is retained within the corresponding engaging groove in the corresponding frame strip, it is not necessary for the coupling members and the frame strips to be finished after molding. Consequently, the frame member can be made at a low cost.

Furthermore, since the connecting portions of the coupling members are curved, they cannot hurt a person during assembly of the coupling members and the frame strips, and damage caused to the panel as a result of contact between the panel and the coupling members can be prevented.

These and other features and advantages of this invention will become apparent in the following detailed description of the preferred embodiments of this invention, with reference to the accompanying drawings, in which:
Fig. 1 is a fragmentary exploded perspective view of a conventional frame member for a solar battery panel disclosed in Taiwanese Utility Model Publication No. M293419;
Fig. 2 is a top view of the first preferred embodiment of a solar battery module according to this invention;
Fig. 3 is a fragmentary exploded perspective view of a frame member of the first preferred embodiment;
Figs. 4 and 5 are fragmentary side views of the first preferred embodiment; and
Fig. 6 is a fragmentary side view of the second preferred embodiment of a solar battery module according to this invention.

Before the present invention is described in greater detail in connection with the preferred embodiments, it should be noted that similar elements and structures are designated by like reference numerals throughout the entire disclosure.

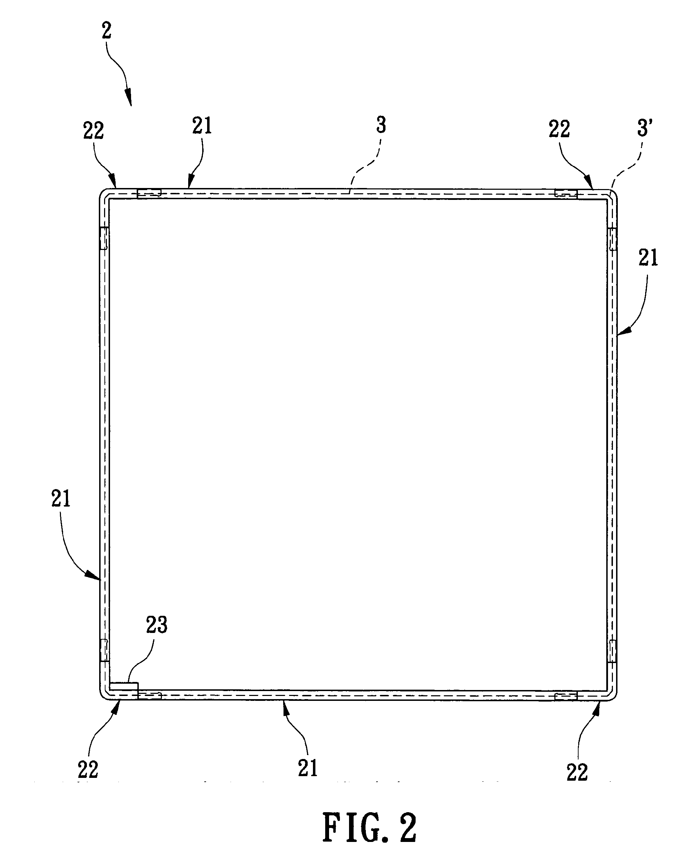

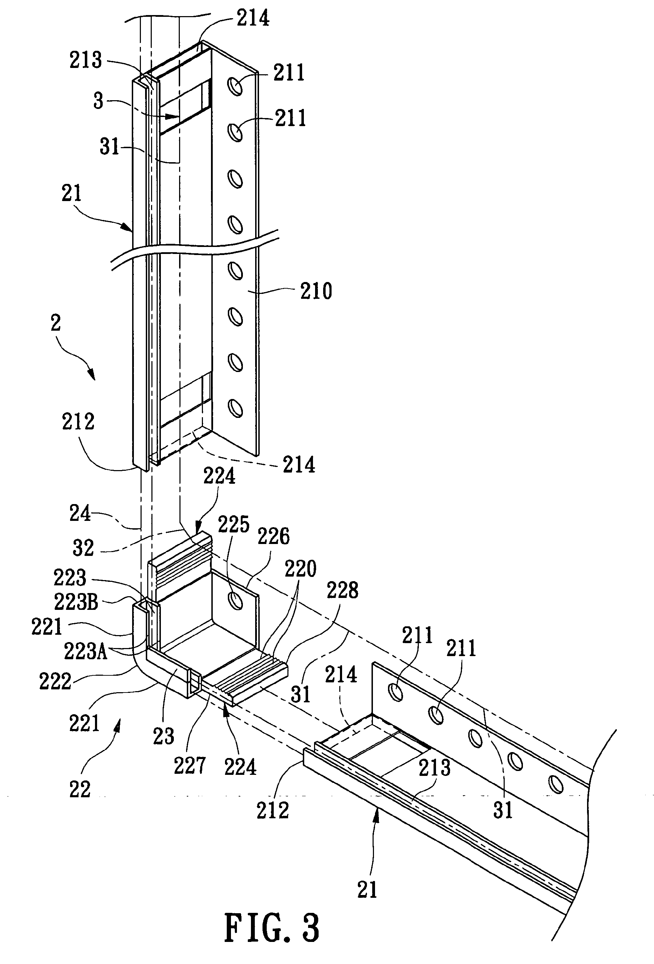

Referring to Fig. 2, the first preferred embodiment of a solar battery module according to this invention includes a frame member 2 and a rectangular solar battery panel 3 surrounded by the frame member 2. The frame member 2 includes a plurality of frame strips 21, a plurality of coupling members 22 each interconnecting two adjacent ones of the frame strips 21, a marking member 23 disposed on one of the coupling members 22 and exposed outwardly of the panel 3, and a waterproof strip 24 (see Fig. 3) disposed within the frame strips 21 and the coupling members 22. In this embodiment, the frame member 2 includes four frame strips 21 and four coupling members 22, and the panel 3 is square, and has four chamfered corners 3'.

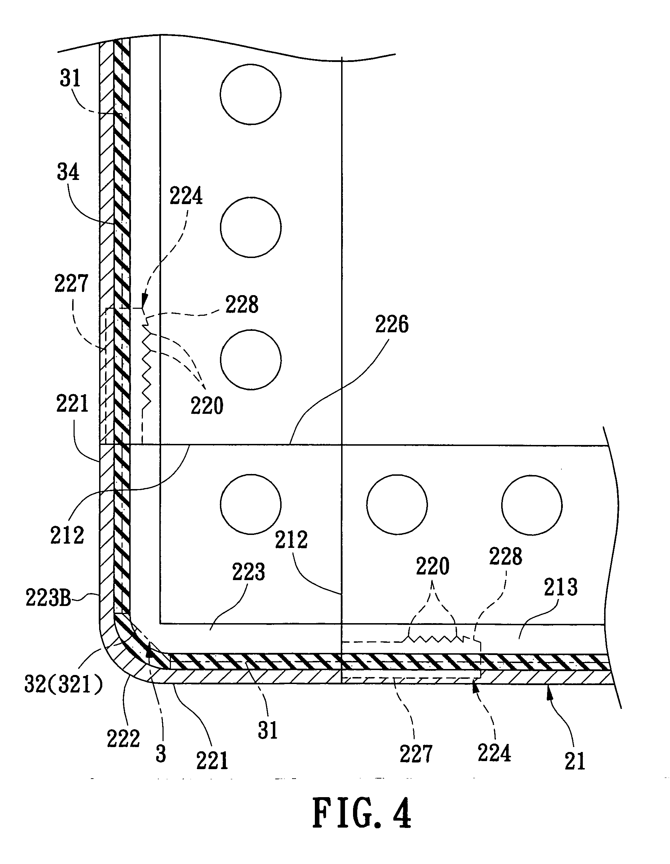

With further reference to Figs. 3 and 4, each of the frame strips 21 has a mounting wall 210 formed with a plurality of fastener holes 211 therethrough, two opposite abutment ends 212 abutting respectively against two adjacent ones of the coupling members 22, a mounting slot 213 extending along a longitudinal direction thereof and having two opposite ends corresponding respectively to the abutment ends 212, and two engaging grooves 214 formed respectively in end surfaces of the abutment ends 212. The mounting wall 210 and the mounting slot 213 of each of the frame strips 21 are disposed respectively at two opposite sides of the corresponding frame strip 21. Any two adjacent ones of the frame strips 21 extend in two different directions, respectively, which are perpendicular to each other.

Each of the coupling members 22 has two abutment portions 221 abutting respectively against the corresponding abutment ends 212 of two adjacent ones of the frame strips 21, a curved connecting portion 222 interconnecting the abutment portions 221, a positioning slot 223 formed in the abutment portions 221 and the connecting portion 222 and in spatial communication with the mounting slots 213 in two adjacent ones of the frame strips 21, two engaging arms 224 extending respectively and outwardly from the abutment portions 221 and press-fitted respectively within the corresponding engaging grooves 214 in the two adjacent ones of the frame strips 21, and a mounting wall 226 connected integrally to the abutment portions 221 and the connecting portion 222 and formed with a fastener hole 225 therethrough. The mounting wall 226 and the positioning slot 223 of each of the coupling members 22 are disposed respectively at two opposite sides of the corresponding coupling member 22. Each of the engaging arms 224 of the coupling members 22 has an insert portion 227 that is inserted into the corresponding engaging groove 214 in the corresponding frame strip 21, a contact portion 228 extending from the insert portion 227 to contact an inner wall surface of the corresponding frame strip 21 defining the corresponding engaging groove 214 such that the corresponding engaging arm 224 is press-fitted within the corresponding engaging groove 214 in the corresponding frame strip 21, and a serrated portion 220 extending from the insert portion 227 to contact the inner wall surface of the corresponding frame strip 21 to thereby facilitate press-fitting of the corresponding engaging arm 224 in the corresponding engaging groove 214.

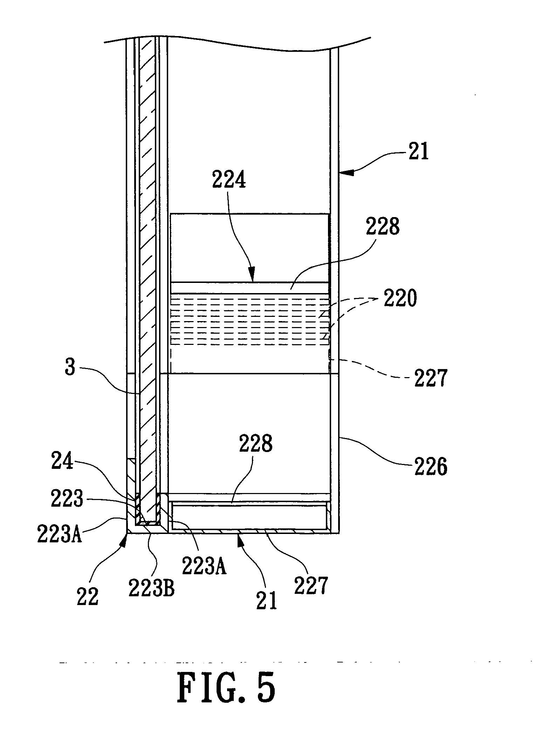

With particular reference to Figs. 3, 4, and 5, the four coupling members 22 are disposed respectively at the four corners of the panel 3. Each of the coupling members 22 further has two parallel sidewalls (223A) and a connecting wall (223B) connected between the sidewalls (223A) to define the corresponding positioning slot 223 thereamong.

The marking member 23 is disposed on one of the abutment portions 221 of one of the coupling members 22, and is exposed outwardly of the panel 3. The waterproof strip 24 is made of an elastomeric material, and is disposed within the mounting slots 213 in the frame strips 21 and the positioning slots 223 in the coupling members 22.

The panel 3 includes a plurality of mounting portions (i.e., side portions) 31 disposed respectively within mounting slots 213 in the frame strips 21, and a plurality of positioning portions (i.e., corner portions) 32 each interconnecting two adjacent ones of the mounting portions 31, disposed within the positioning slot 223 in the corresponding coupling member 22 and between the sidewalls (223A) of the corresponding coupling member 22, and having an inclined outer edge 321. The waterproof strip 24 is disposed between the panel 3 and the connecting walls (223B) of the coupling members 22.

A plurality of fasteners (not shown), such as screws, rivets, etc., can be extended respectively through the fastener holes 211, 225 in the frame strips 21 and the coupling members 22 so as to fasten the solar battery module to a support (e.g., a roof).

From the forgoing, the solar battery module of this invention has the following advantages:
(1) Each end of each of the coupling members 22 is connected to the corresponding frame strip 21, such that the corresponding abutment portion 221 of the corresponding coupling member 22 abuts against the corresponding abutment end 212 of the corresponding frame strip 21, and such that the corresponding engaging arm 224 of the corresponding coupling member 22 is press-fitted within the corresponding engaging groove 214 in he corresponding frame strip 21, as described above. As such, since the frame strips 21 do not have inclined surfaces, it is not necessary for the coupling members 22 and the frame strips 21 to be finished after molding. Consequently, the frame member 2 can be made at a low cost.
(2) The elastomeric waterproof strip 24 can prevent water from flowing into a space between the frame member 2 and the panel 3, and provide a vibration-absorbing effect to the panel 3 to thereby minimize damage to the panel 3 caused due to vibration of the solar battery module. Furthermore, with the inclusion of the inclined outer edges 321 in the positioning portions 32 of the panel 3, damage to the positioning portions 32 or corner portions of the panel 3 can be avoided.
(3) Since the connecting portions 222 of the coupling members 22 are curved, they cannot hurt a person during assembly of the coupling members 22 and the frame strips 21 to thereby promote safety during use of the solar battery module.
(4) The coupling members 22 can be positioned effectively relative to the frame strips 21 by press-fitting of the engaging arms 224 within the engaging grooves 214, respectively. Due to the presence of the contact portions 228 and the serrated portions 220, movement of the engaging arms 224 within the engaging grooves 213 can be prevented.
(5) The making member 23 can be utilized to show the brand name, the model number, etc.

Thus, the object of this invention is achieved.

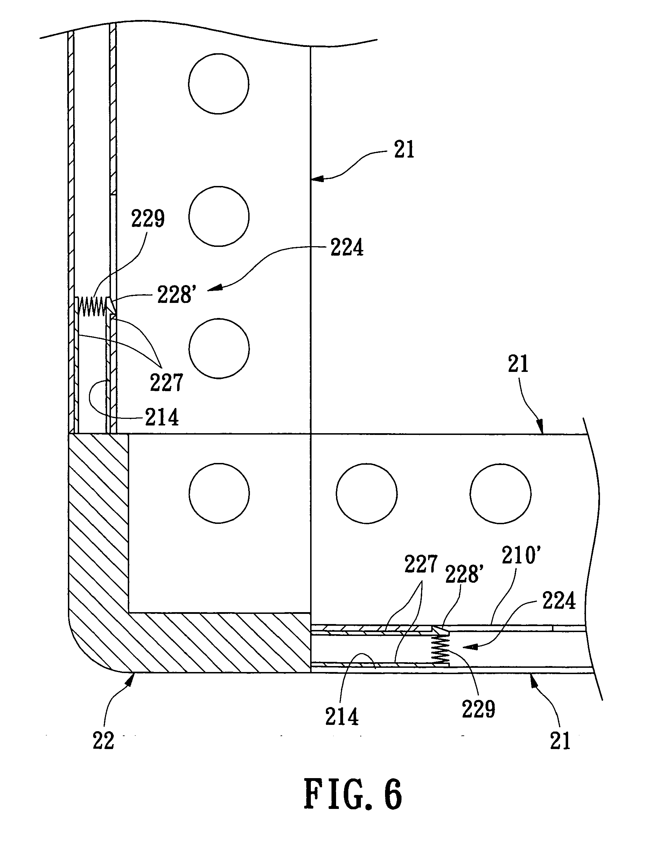

Fig. 6 shows the second preferred embodiment of a solar battery module according to this invention, which is different from the first preferred embodiment in the manner in which each of the frame strips 21 is connected to any adjacent one of the coupling members 22.

In this embodiment, each of the frame strips 21 further has two openings 210' in spatial communication with the engaging grooves 214, respectively, and each of the engaging arms 224 of each of the coupling members 22 has two spaced-apart insert portions 227 that are parallel to each other and that are inserted into the corresponding engaging groove 214 in the corresponding frame strip 21, a retaining portion 228' extending from one of the insert portions 227, and a resilient member 229 configured as a coiled compression spring and having two ends connected respectively to the insert portions 227 for biasing the retaining portion 228' into the corresponding opening 210' in the corresponding frame strip 21 so as to prevent removal of the corresponding arm 224 from the corresponding engaging groove 214.

The retaining portion 228' of each of the engaging arms 224 can be pushed and removed from the corresponding opening 210' in the corresponding frame strip 21 to allow for removal of the corresponding arm 224 from the corresponding engaging groove 214 in the corresponding frame strip 21.

## Claims

1. A solar battery module comprising:
a frame member (2) including a plurality of frame strips (21) and a plurality of coupling members (22) each interconnecting two adjacent ones of said frame strips (21), each of said frame strips (21) having two opposite abutment ends (212) abutting respectively against two adjacent ones of said coupling members (22), a mounting slot (213) extending along a longitudinal direction thereof and having two opposite open ends corresponding respectively to said abutment ends (212), and two engaging grooves (214) formed respectively in end surfaces of said abutment ends (212), each of said coupling members (22) having two abutment portions (221) abutting respectively against two corresponding ones of said abutment ends (212) of two adjacent ones of said frame strips (21), a curved connecting portion (222) interconnecting said abutment portions (221), a curved positioning slot (223) formed in said abutment portions (221) and said connecting portion (222) and in spatial communication with said mounting slots (213) in the two adjacent ones of said frame strips (21), and two engaging arms (224) extending respectively and outwardly from said abutment portions (221) and retained respectively within two corresponding ones of said engaging grooves in the two adjacent two ones of said frame strips (21); and
a solar battery panel (3) including a plurality of mounting portions (31) disposed respectively within said mounting slots (213) in said frame strips (21) of said frame member (2), and a plurality of positioning portions (32) each interconnecting two adjacent ones of said mounting portions (31) and disposed within said positioning slot (223) in a corresponding one of said coupling members (22) of said frame member (2).

2. The solar battery module as claimed in Claim 1, wherein any two adjacent ones of said frame strips (21) extend in two different directions, respectively, which are perpendicular to each other.

3. The solar battery module as claimed in Claim 2, wherein each of said coupling members (22) further has two parallel sidewalls (223A) and a connecting wall (223B) connected between said sidewalls (223A) to define said positioning slot (223) in a corresponding one of said coupling members (22) thereamong, said solar battery panel (3) being generally rectangular and having four chamfered corners, said coupling members (22) being disposed respectively at said four chamfered corners of said solar battery panel (3), each of said positioning portions (32) of said solar battery panel (3) being disposed between said sidewalls (223A) of a corresponding one of said coupling members (22).

4. The solar battery module as claimed in Claim 3, wherein said frame member (2) further has a waterproof strip (24) disposed within said mounting slots (213) in said frame strips (21) and said positioning slots (223) in said coupling members (22) and between said solar battery panel (3) and said connecting walls (223B) of said coupling members (22).

5. The solar battery module as claimed in Claim 1, wherein each of said frame strips (21) of said frame member (2) further has a mounting wall (210) formed with at least one fastener hole (211) therethrough, said mounting wall (210) and said mounting slot (213) of each of said frame strips (21) of said frame member (2) being disposed respectively at two opposite sides of a corresponding one of said frame strips (21).

6. The solar battery module as claimed in Claim 1, wherein each of said coupling members (22) of said frame member (2) further has a mounting wall (226) connected integrally to said abutment portions (221) and said connecting portion (222) of a corresponding one of said coupling members (22) and formed with a fastener hole (225) therethrough, said mounting wall (225) and said positioning slot (223) of each of said coupling members (22) of said frame member (2) being disposed respectively at two opposite sides of a corresponding one of said coupling members (22).

7. The solar battery module as claimed in Claim 1, wherein each of said engaging arms (224) of said coupling members (22) has an insert portion (227) that is inserted into a corresponding one of said engaging grooves (214) in a corresponding one of said frame strips (21), and a contact portion (228) extending from said insert portion (227) such that a corresponding one of said engaging arms (224) is press-fitted within the corresponding one of said engaging grooves (214) in the corresponding one of said frame strips (21).

8. The solar battery module as claimed in Claim 7, wherein each of said engaging arms (224) of said coupling members (22) further has a serrated portion (220) extending from said insert portion (227) to facilitate pressing-fitting of the corresponding one of said engaging arms (224) within the corresponding one of said engaging grooves (214) in the corresponding one of said frame strips (21).

9. The solar battery module as claimed in Claim 1, wherein:
each of said frame strips (21) further has two openings (210') in spatial communication with said engaging grooves (214) in a corresponding one of said frame strips (21), respectively; and
each of said engaging arms (224) of said coupling members (22) has two spaced-apart insert portions (227) that are parallel to each other and that are inserted into a corresponding one of said engaging grooves (214) in a corresponding one of said frame strips (21), a retaining portion (228') extending from one of said insert portions (227), and a resilient member (229) having two ends connected respectively to said insert portions (227) for biasing said retaining portion (228') into a corresponding one of said openings (210') in the corresponding one of said frame strips (21) so as to prevent removal of a corresponding one of said engaging arms (224) from the corresponding one of said engaging grooves (214) in the corresponding one of said frame strips (21).

10. The solar battery module as claimed in Claim 1, wherein said frame member (2) further includes a marking member (23) disposed on one of said abutment portions (221) of one of said coupling members (22) of said frame member (2), and is exposed outwardly of said solar battery panel (3).
